# EUROPÄISCHE PATENTSCHRIFT

(11) **EP 3 854 930 B1**
(45) Veröffentlichungstag und Bekanntmachung des Hinweises auf die Patenterteilung: **06.12.2023**
(21) Anmeldenummer: 20216301.0
(22) Anmeldetag: 22.12.2020
(51) Int. Cl.: D06F 39/10, B01D 29/01, B01D 29/64, A47L 15/42, D06F 58/22

(54) **WASSERFÜHRENDES HAUSHALTSGERÄT MIT EINER FILTEREINHEIT**
WATER-TRANSPORTING HOUSEHOLD DEVICE COMPRISING A FILTER UNIT
APPAREIL ÉLECTROMÉNAGER À CIRCULATION D'EAU COMPRENANT UNE UNITÉ DE FILTRATION

(30) Priorität: 22.01.2020 DE 102020200685
(43) Veröffentlichungstag der Anmeldung: 28.07.2021
(73) Patentinhaber: BSH Hausgeräte GmbH, 81739 München (DE)
(72) Erfinder: Bischof, Andreas, 10407 Berlin (DE); Eglmeier, Hans, 10587 Berlin (DE)

(56) Entgegenhaltungen:
- EP-A1- 2 226 421
- WO-A1-2019/081013
- US-A1- 2010 154 841
- US-A1- 2011 197 933

## Beschreibung

Die Erfindung betrifft ein wasserführendes Haushaltsgerät.

Bei wasserführenden Haushaltsgeräte strömen unterschiedliche Arten von Fluiden. Die Fluide können bei Kaffeemaschinen, Kühl- und Gefriergeräten und oder Kühl-Gefrierkombinationen Wasser umfassen, bei Geschirrspül-, Waschmaschinen und/oder bei Waschtrocknern ein Wasser-Seifen-Gemisch und bei Trocknern ein Fluid aus Dampf bzw. Prozessluft. Bei Durchlaufen eines Betriebsprogramms des jeweiligen Haushaltsgeräts, wird das Fluid in dem wasserführenden Haushaltsgerät verwendet und erfordert eine Filterung des Fluids. Insbesondere bei Reinigungs- bzw. Trocknungsprozessen können sich Schmutzpartikel von den zu reinigenden bzw. trocknenden Gegenständen lösen und so in das jeweilige Fluid gelangen und des Fluids verunreinigen. Die Schmutzpartikel können unter anderem Speisereste, Haare, Fette, Sand, Fasern aus Wäschestücken, Mikroplastikpartikel und/oder Staubartikel umfassen.

Um die Schmutzpartikel aus den Fluiden von wasserführenden Haushaltsgeräten zu filtern, werden verschiedene Filtereinheiten verwendet. Das Fluid durchströmt dabei die Filtereinheit wie im Folgenden beispielsweise an einer Wasch- bzw. Geschirrspülmaschine gezeigt wird. Während und/oder nach eines Reinigungs- bzw. Trocknungsvorgangs wird das Fluid in der Filtereinheit gefiltert bzw. gereinigt und/oder wiederaufbereitet und kann anschließend entweder wieder dem Reinigungs- bzw. Trocknungsvorgang zugeführt oder in einen Ausguss geführt werden.

Bei Durchströmen der Filtereinheit, wird das Fluid gefiltert und von Schmutzpartikel befreit. Das gefilterte Fluid strömt aus der Filtereinheit heraus, in der Filtereinheit bleiben die Schmutzpartikel zurück. Über kurz oder lang führt das zu einer Verstopfung der Filtereinheit, so dass diese gereinigt werden muss, damit Fluid wieder gefiltert werden kann. Das Reinigen bzw. das Vorreinigen der Filtereinheit kann beispielsweise über Rakelmittel erfolgen. Die Rakelmittel liegen dabei im Wesentlichen auf einer Filtermembran der Filtereinheit auf.

In der DE 10 2007 061 036 A1 ist ein wasserführendes Haushaltsgerät mit einer Filtereinheit beschrieben. Die Filtereinheit weist eine kreisförmige Filtermembran auf, auf bzw. an der ein Rakelmittel angeordnet ist. Das Rakelmittel ist dauerhaft mit der Filtermembran in Kontakt, so dass durch Bewegen des Rakelmittels und der Filtereinheit relativ zu einander, ein Abstrafen bzw. ein Reinigen der Filtermembran erfolgt.

Eine Waschmaschine mit einem Umpumpsystem, wobei in dem Umpumpsystem eine Filtereinheit angeordnet ist, ist in der JP 2008-142267 offenbart. Die Filtereinheit weist im Wesentlichen eine Filtermembran auf. Des Weiteren ist in der Filtereinheit ein Filtereinheitreinigungssystem angeordnet, wobei das Filtereinheitreinigungssystem in Kontakt mit der Filtermembran ist. Durch Rotieren des Filtereinheitreinigungssystem werden von der Filtermembran sich auf der Filtermembran ablagernde Partikel entfernt.

Die oben beschriebenen Lösungen, offenbaren jedoch nichts darüber, in welcher Weise und wie oft die Filtereinheit gereinigt werden muss, und wie eine Durchführung einer Reinigung der Filtereinheit aussehen kann. Erfahrungsgemäß verstopft eine herkömmliche Filtereinheit in einem wasserführenden Haushaltsgerät ziemlich flott auf. Ein Verstopfen der Filtereinheit in dem wasserführenden Haushaltsgerät kann bereits nach einem Reinigungs- bzw. Trocknungsvorgang auftreten. Das führt dazu, dass die Filtereinheit regelmäßig gereinigt werden muss, um einem Verstopfen der Filtereinheit vorzubeugen. Ein schneller und einfacher Reinigungsvorgang ist daher wünschenswert.

Die Offenlegungsschrift EP 2 226 421 A1 offenbart ein Haushaltsgerät mit einer Filtereinheit, die Partikel aus einem Luftstrom filtert. Die Filtereinheit weist ein kreisförmiges Filterelement und eine Reinigungsvorrichtung auf, wobei die Reinigungsvorrichtung zum Reinigen des Filterelements vorgesehen ist.

Die Offenlegungsschrift US 2011/197933 A1 offenbart eine Spülmaschine mit einer Filtereinheit.

Die Offenlegungsschrift WO 2019/081013 A1 offenbart eine Waschmaschine mit einer Filtereinheit zum Filtern von Microfasern.

Die Offenlegungsschrift US 2010/154841 A1 offenbart eine Spülmaschine mit einer Filtereinheit.

Es ist daher Aufgabe der Erfindung, ein wasserführendes Haushaltsgerät bereitzustellen, bei dem die Filtereinheit einfach und schnell reinigbar ist und wobei die Schmutzpartikel in der Filtereinheit verbleiben und eine Verschmutzung des Haushaltsgeräts durch die Reinigung der Filtereinheit unterbleibt.

Die Aufgabe wird durch die Merkmale des Patentanspruchs 1 gelöst. Vorteilhafte Ausführungsformen sind Gegenstand der abhängigen Patentansprüche, der Beschreibung und der Zeichnungen.

Gemäß einem Aspekt der Erfindung wird die erfindungsgemäße Aufgabe durch ein wasserführendes Haushaltsgerät gelöst. Das wasserführende Haushaltsgerät weist eine Filtereinheit zum Filtern von Fluiden auf, wobei die Filtereinheit ein Filtergehäuse mit mindestens einem Wandelement umfasst. Weiterhin weist die Filtereinheit eine Filterbaugruppe auf, wobei die Filterbaugruppe mindestens eine erste Komponente und mindestens eine zweite Komponente umfasst, wobei die mindestens eine erste Komponente mindestens eine Filtermembran zum Filtern des Fluids aufweist und die mindestens eine zweite Komponente eine Rakeleinheit, die die mindestens eine Filtermembran reinigt, wobei die Rakeleinheit mindestens einen Rakelarm aufweist und der mindestens eine Rakelarm an der mindestens einen Filtermembran anliegt. Des Weiteren umfasst die Filtereinheit mindestens eine Filtereinlassöffnung, durch die Fluid indie Filtereinheit strömt, und mindestens eine Filterauslassöffnung, die im Bereich der Filtermembran ausgebildet ist und durch die das Fluid aus dem Filtergehäuse strömt. An dem Filtergehäuse ist eine Entnahmeöffnung ausgebildet, über die mindestens eine der Komponenten der Filterbaugruppe in einer Entnahmerichtung derart aus dem Filtergehäuse entnehmbar ist, dass abgelagerte Schmutzpartikel in dem Filtergehäuse zurückbleiben.

Durch die Entnahmeöffnung kann ein Benutzer einfach und schnell auf ein Innenleben der Filtereinheit zugreifen, wobei die Rakeleinheit und/oder die Filtermembran entnehmbar sind. Des Weiteren ist die Rakeleinheit einfach und schnell aus der Filtereinheit entnehmbar und außerhalb des wasserführenden Haushaltsgeräts reinigbar. Dadurch bleiben im Wesentlichen lediglich die Schmutzpartikel, die auch als Filterkuchen bezeichnet werden, in der Filtereinheit zurück. Der Filterkuchen kann nach dem Entfernen der Rakelmittel einfach aus der Filtereinheit entfernt werden.

Das Filtergehäuse weist eine Mittelsenkrechte auf, die im Wesentlichen senkrecht zu der mindestens einen Filtermembran ist, wobei die Rakeleinheit vorzugsweise von der Filtermembran in radialer Richtung und/oder in axialer Richtung bezüglich der Mittelsenkrechten entnehmbar ist. Die Filtereinheit kann dadurch an das jeweilige Haushaltsgerät angepasst werden. Eine einfache und an die Filtereinheit angepasste Entnahme der Rakeleinheit ist durch die Entnahme in radialer Richtung und/oder in axialer Richtung gewährleistet.

Vorzugsweise erstreckt sich die Rakeleinheit von der Filtermembran hin zu der Entnahmeöffnung und die Rakeleinheit ist bezüglich der Entnahmerichtung hinterschnittfrei ausgebildet.

"Hinterschnittfrei" bedeutet hier, dass kein Spalt oder Freiraum zwischen der Rakeleinheit und dem mindestens einem Wandelement ausgebildet ist, in dem sich Schmutzpartikel sammeln bzw. ablagern können. Die Rakeleinheit ist somit im Wesentlichen an dem mindestens einem Wandelement derart anliegend ausgebildet, dass sich keine Ablagerungen von Schmutzpartikel zwischen dem mindestens einem Wandelement und der Rakeleinheit bilden.

Vorteilhafterweise ist eine Antriebseinheit in dem mindestens einem Rakelarm ausgebildet, wobei die Antriebseinheit eine Relativbewegung von Filtermembran und Rakeleinheit zueinander erzeugt. Dadurch ist gewährleistet, dass die Antriebseinheit platzsparende in einem bauraumbegrenzten wasserführenden Haushaltsgerät ausgebildet ist. Durch die Antriebseinheit, kann entweder die Rakeleinheit und/oder die Filtermembran angetrieben werden, so dass eine relative Bewegung von der Rakeleinheit zu der Filtermembran stattfindet. Durch die Bewegung von Rakeleinheit und Filtermembran relativ zueinander, wird die Filtermembran abgerakelt bzw. gesäubert, so dass einem Verstopfen der Filtermembran durch Schmutzpartikel vorgesorgt bzw. verzögert wird.

Um bei einer radialen Entnahme zu gewährleisten, dass die Rakeleinheit bei der Entnahmeöffnung positioniert wird, ist es von Vorteil, dass Positionierelemente vorgesehen sind, die die Rakeleinheit derart positionieren, dass die Rakeleinheit derart aus dem Filtergehäuse entnehmbar ist, dass abgelagerte Schmutzpartikel im Filtergehäuse zurückbleiben. Ein mechanisches Verstellen der Rakeleinheit durch den Bediener ist durch diese Lösung überflüssig.

Dadurch wird gewährleistet, dass bei der Entnahme keine Schmutzpartikel in das wasserführende Haushaltsgerät und/oder vor das wasserführende Haushaltsgerät gelangen können, so dass bei einem Reinigen ein Mehraufwand entsteht.

Vorzugsweise weist der mindestens eine Rakelarm mindestens einen gebogenen Abschnitt auf. Durch die gebogene Form, werden die Schmutzpartikel bei einer Drehbewegung der Rakeleinheit in radialer Richtung nach außen, von der dr Mittelsenkrechten weg, abgerakelt bzw.geführt.

Der mindestens eine Rakelarm erstreckt sich vorzugsweise im Wesentlichen senkrecht von der mindestens einen Filtermembran, wodurch alle Schmutzpartikel gleichmäßig mitgenommen werden.

In einer alternativen Ausführungsform spannt der mindestens eine Rakelarm und die Filtermembran einem Winkel von α<90 Grad auf, so dass der mindestens eine Rakelarm schräg in Bezug auf die Filtermembran ausgebildet ist. Dadurch ergibt sich der Vorteil, dass auftretende Reibkräfte abgefilterter Schmutzpartikel gegenüber dem Rakelarm reduziert sind.

Ein Begrenzungselement ist zum Begrenzen der Filtereinheit ausgebildet und das mindestens eine Wandelement weist eine Höhe auf, die sich von der Filtermembran bis zu dem mindestens einen Begrenzungselement erstreckt, wobei sich die Rakeleinheit im Wesentlichen über die Höhe erstreckt. Das Begrenzungselement ist im Wesentlichen gegenüber der Filtermembran angeordnet. Das Begrenzungselement kann vorzugsweise eine Art Deckel der Filtereinheit darstellen. Die Filtermembran kann vorzugsweise einen Boden der Filtereinheit darstellen.

Dadurch wird gewährleistet, dass eine Verbindung zwischen der Filtermembran und dem Begrenzungselement hergestellt wird, so dass sich keine Schmutzpartikel, insbesondere Haare, um den mindestens einen Rakelarm legen bzw. wickeln können, wodurch ein Reinigen der Rakeleinheit deutlich einfacher und schneller durchgeführt werden kann.

Vorzugsweise ist die Filtermembran in radialer Richtung bezüglich der Mittelsenkrechten entnehmbar. Dadurch die Entnahme der Filtermembran kann die Filtermembran einfach gereinigt werden.

Die Rakeleinheit ist vorzugsweise symmetrisch in Bezug auf die Mittelsenkrechte ausgebildet. Mit einer symmetrischen in Bezug auf die Mittelsenkrechte ausgestalteten Rakeleinheit ist ein gleichmäßig funktionierendes Abrakeln der Rakeleinheit unabhängig von einer Drehrichtung der Rakeleinheit gewährleistet.

Alternativ ist die Rakeleinheit vorzugsweise asymmetrisch in Bezug auf die Mittelsenkrechte ausgebildet. Mit der asymmetrisch in Bezug auf die Mittelsenkrechte ausgestalteten Rakeleinheit ist ein gezieltes Abrakeln bzw. Schieben der Schmutzpartikel möglich.

Vorteilhafterweise ist eine Drehrichtung der Rakeleinheit variabel, wodurch die Rakeleinheit je nach Bedarf im Uhrzeigersinn und gegen den Uhrzeigersinn betrieben werden kann.

Das mindestens eine Wandelemente weist vorzugsweise zumindest teilweise eine weitere Filtermembran auf. Durch die zumindest teilweise eine weitere Filtermembran wird die Filterfläche erweitert und ein hydraulischer Widerstand des Fluids reduziert.

Vorteilhafterweise ist die weitere Filtermembran im Bereich der Filtermembran ausgebildet, wobei die Rakeleinheit die weitere Filtermembran zumindest teilweise bedecken. Dadurch kann eine Rakeleinheit bzw. ein Rakelarm die Filtermembran und die mindestens eine weitere Filtermembran abrakeln, wodurch eine weitere Rakeleinheit überflüssig ist.

Weitere Eigenschaften und Vorteile der vorliegenden Erfindung ergeben sich aus der nachfolgenden Beschreibung unter Bezugnahme auf die Zeichnungen.
- Fig. 1: zeigt eine schematische Schnittdarstellung eines wasserführenden Haushaltsgeräts mit einer Filtereinheit;
- Fig. 2a bis 2c: zeigen jeweils eine Draufsicht eines Ausschnitts einer Filtereinheit mit einem Ausführungsbeispiel einer symmetrisch ausgebildetenRakeleinheit;
- Fig. 3a und 3b: zeigen jeweils eine Draufsicht eines Ausschnitts einer Filtereinheit mit einem Ausführungsbeispiel einer asymmetrisch ausgebildeten Rakeleinheit;
- Fig. 4a bis 4d: zeigen jeweils eine Draufsicht eines Ausschnitts einer Filtereinheit mit einem Ausführungsbeispiel radial entnehmbarer Rakeleinheiten;
- Fig. 5: ist eine beispielhafte Darstellung einer axial entnehmbar ausgebildeter Rakeleinheit bei radialer Entnahme.

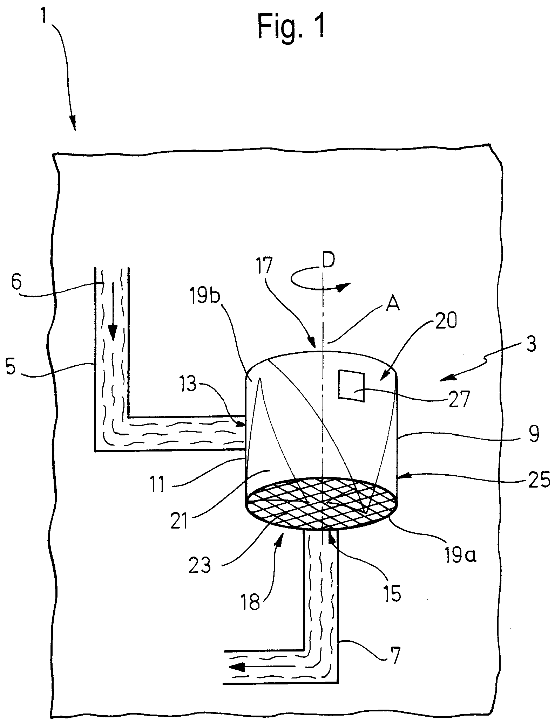

In Fig. 1 ist schematisch eine Schnittdarstellung eines wasserführenden Haushaltsgeräts 1 mit einer Filtereinheit 3 dargestellt. Unter einem wasserführenden Haushaltsgerät 1 kann eine Waschmaschine, aber auch ein Trockner und/oder ein Waschtrockner verstanden werden. Des Weiteren ist unter einem wasserführenden Haushaltsgerät 1 eine Kaffeemaschine, ein Geschirrspüler aber auch ein Kühl- und/oder Gefrierschrank und/oder eine Kühl-Gefrierkombination zu verstehen, wobei bei einem Kühl- oder Gefrierschrank eine Eisbereitung und -ausgabe sowie eine Wasserkühlung und - ausgabe im Vordergrund stehen.

In dem wasserführenden Haushaltsgeräts 1 ist eine Zulaufleitung 5, in der Fluid 6 zu der Filtereinheit 3 strömt und eine Ablaufleitung 7, in der das Fluid 6 gefiltert aus der Filtereinheit 3 abströmt, ausgebildet. Die Filtereinheit 3 weist ein Filtergehäuse 9 mit mindestens einem Wandelement 11 auf. Das mindestens eine Wandelement 11 kann eine zylindrische Form, wie in Fig. 1 dargestellt ist, aufweisen. Es ist aber auch denkbar, dass das mindestens eine Wandelement 11 eine quadratische und/oder rechteckige Form und/oder eine beliebige andere geschlossene Form aufweist. Über mindestens eine Einlassöffnung 13 strömt das Fluid 6 über die Zulaufleitung 5 in die Filtereinheit 3. Über mindestens eine Auslassöffnung 15 strömt das Fluid 6 über die Ablaufleitung 5 aus der Filtereinheit 3.

Die Filtereinheit 3 umfasst weiterhin im Wesentlichen ein Begrenzungselement 17. Das Begrenzungselement 17 kann wie in Fig. 1 dargestellt ist, ein Deckelelement der Filtereinheit 3 darstellen. Es ist aber auch denkbar, dass das Begrenzungselement 17 ein beliebig anderes Element des mindestens eines Wandelements 11 darstellt.

Des Weiteren weist die Filtereinheit 3 eine Filterbaugruppe 18 auf. Die Filterbaugruppe 18 umfasst mindestens eine erste Komponente 19a und mindestens eine zweite Komponente 19b. Die mindestens eine zweite Komponente 19b umfasst im Wesentlichen mindestens eine Rakeleinheit20. Die mindestens eine erste Komponente 19a der Filterbaugruppe 18 umfasst mindestens eine Filtermembran 23.

Die Rakeleinheit 20 weist mindestens einen Rakelarm 21 auf. In dem Ausführungsbeispiel in Fig. 1 sind beispielsweise drei Rakelarme 21 dargestellt. Es ist aber auch denkbar, dass lediglich ein Rakelarm 21 ausgebildet ist und/oder zwei oder mehr Rakelarme 21. Der mindestens eine Rakelarm 21 kann unterschiedliche Formen in der Ausgestaltung aufweisen. Auf die unterschiedlichen Formen des Rakelarms 21 wird weiter unten näher eingegangen.

Die mindestens eine Filtermembran 23 kann beliebig aufgebaut sein und beispielsweise aus mehreren Membranschichten mit beispielsweise unterschiedlicher Porengröße bestehen. Das oben bereits erwähnte Begrenzungselement 17 ist vorzugsweise der Filtermembran 23 gegenüberliegend angeordnet.

Der mindestens eine Rakelarm 21 liegt im Wesentlichen an der mindestens einen Filtermembran 23 an. Die mindestens eine Filtermembran 23 ist vorzugsweise in dem mindestens einem Wandelement 11 derart aufgenommen, dass die Filtermembran 23 und das mindestens eine Wandelement 11 miteinander fest und/oder lösbar verbunden sind.

Es ist auch vorstellbar, dass neben der Filtermembran 23 eine weitere Filtermembran 25 in der Filtereinheit 3 ausgebildet ist. Die weitere Filtermembran 25 ist zumindest teilweise an dem mindestens einem Wandelement 11 des Filtergehäuses 9 ausgebildet. Vorzugsweise ist die weitere Filtermembran 25 im Bereich der mindestens einen Filtermembran 23 ausgebildet, so dass die mindestens eine Filtermembran 23 und die weitere Filtermembran 25 von der Rakeleinheit 20 'berakelt' werden können. Der Begriff 'berakelt' bedeutet in diesem Zusammenhang, dass die Filtermembran 23 von der Rakeleinheit 20 abgestreift wird und dadurch von Schmutzpartikel befreit wird. Der Vorteil einer weiteren Filtermembran 25 liegt darin, dass durch eine weitere Filtermembran 25 eine größere Membranfläche geschaffen wird, wodurch ein höherer Durchsatz an Fluid 6 in der Filtereinheit 3 gefiltert bzw. erzielt werden kann.

Die Filtereinheit 3 bzw. das Filtergehäuse 9 weist weiterhin eine Mittelsenkrechte M auf. Die Rakeleinheit 20 ist drehend in der Filtereinheit 3 gelagert und dreht sich vorzugsweise um die Mittelsenkrechte M. Es ist aber auch denkbar, dass die mindestens eine Filtermembran 23 und/oder die weitere Filtermembran 25 drehend in dem Filtergehäuse 9 gelagert ist. Wichtig ist, dass sich entweder die Rakeleinheit 20 relativ zu der Filtermembran 23 und/oder der weiteren Filtermembran 25 bewegt oder dass sich die Filtermembran 23 und/oder die weitere Filtermembran 25 relativ zu der Rakeleinheit 20 bewegen. Des Weiteren ist denkbar, dass sowohl die Filtermembran 23 und/oder die weitere Filtermembran 25 als auch die Rakeleinheit 20 drehend in dem Filtergehäuse 9 gelagert sind und sich relativ zu einander bewegen, beispielsweise in unterschiedlichen Drehrichtungen D.

Eine Antriebseinheit 27 ist vorzugsweise in der Rakeleinheit 20 angeordnet und ist derart ausgebildet, dass entweder die Rakeleinheit 20 und/oder die Filtermembran 23 und/oder die weitere Filtermembran 25 angetrieben wird. In Fig. 1 ist beispielsweise eine Drehrichtung D der Rakeleinheit 20 gegen den Uhrzeigersinn durch den Pfeil D dargestellt. Es ist aber auch denkbar, dass die Drehrichtung D im Uhrzeigersinn verläuft. Weiterhin ist denkbar, dass die Drehrichtung D der Rakeleinheit 20 und/oder der Filtermembran 23 variabel ist. Falls erwünscht ist, kann während eines Filtervorgangs die Rakeleinheit 20 und/oder die Filtermembran abwechselnd im Uhrzeigersinn und gegen den Uhrzeigersinn gedreht werden. Es ist aber auch vorstellbar, dass die Drehrichtung D von Filtervorgang zu Filtervorgang variiert.

Weiterhin ist an dem Filtergehäuse 9 eine Entnahmeöffnung 29 ausgebildet. Die Entnahmeöffnung 29 kann entweder an dem mindestens einem Wandelement 11 und/oder an dem Begrenzungselement 17 ausgebildet sein. Der Ort der Entnahmeöffnung 29 richtet sich nach der Rakeleinheit 20. Ist die Rakeleinheit 20 aus dem Filtergehäuse 9 in radialer Richtung entnehmbar, so ist die Entnahmeöffnung 29 an dem mindestens einen Wandelement 11 vorgesehen. Ist die Rakeleinheit 20 in axialer Richtung bezüglich der Mittelsenkrechten M aus dem Filtergehäuse 9 entnehmbar, so ist die Entnahmeöffnung 29 an dem Begrenzungselement 17 ausgebildet. Die Rakeleinheit 20 ist somit wenigstens in einer Entnahmerichtung entnehmbar. Denkbar ist aber auch, dass beide Entnahmerichtung, in radialer Entnahmerichtung und/oder in axialer Entnahmerichtung, vorgesehen sind. Denkbar ist aber auch, dass die Filtermembran 23 entnehmbar ausgebildet ist. Die Filtermembran 23 ist vorzugsweise in radialer Richtung bezüglich der Mittelsenkrechten M entnehmbar.

Die in Fig. 1 dargestellte Rakeleinheit 20 ist vorzugsweise in axialer Richtung bezüglicher der Mittelsenkrechten M aus dem Filtergehäuse 9 entnehmbar. Durch die axiale Entnahme der Rakeleinheit 20 bleiben die Schmutzpartikel, auch Filterkuchen genannt, in dem Filtergehäuse 9 zurück. Die Rakeleinheit 20 kann einfach und schnell gereinigt werden, sowie der Filterkuchen aus dem Filtergehäuse 9 entfernt und die Filtereinheit 3 anschließend wieder in Betrieb genommen werden.

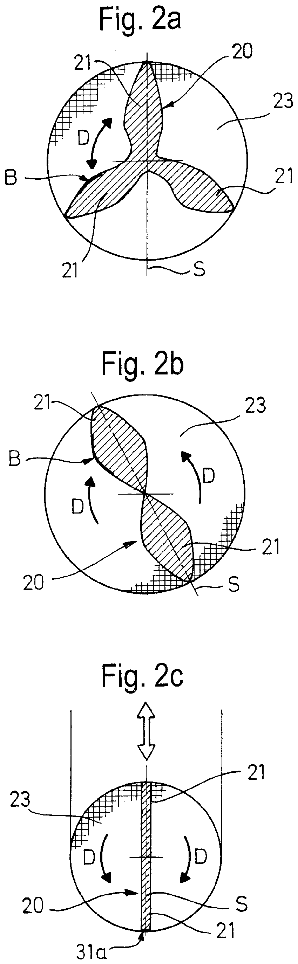

In den Fig. 2a bis 2c ist jeweils eine Draufsicht eines Ausschnitts einer Filtereinheit 3 mit einem Ausführungsbeispiel einer symmetrisch ausgebildeten Rakeleinheit 20 gezeigt. Die in Fig. 2a bis 2c gezeigten Ausführungsbeispiele der Rakeleinheit 20 bzw. die Rakelarme 21 sind anhand einer Symmetrieachse S spiegelbar ausgebildet.

Die in Fig. 2a gezeigte Rakeleinheit 20 weist beispielsweise drei Rakelarme 21 auf. Weiterhin sind die Rakelarme 21 gebogen ausgebildet bzw. weisen die Rakelarme mindestens einen gebogenen Abschnitt B auf. Die Drehrichtung D der Rakeleinheit 20 ist in beide Richtungen möglich, wobei ein Abrakeln der Filtermembran 23 unabhängig von der Drehrichtung D gleich gut funktioniert. In Bezug auf die Mittelsenkrechte M eignet sich die in Fig. 2a gezeigte Rakeleinheit 20 besonders gut für eine Entnahme in axialer Entnahmerichtung.

Die Rakeleinheit 20 in Fig. 2b weist zwei Rakelarme 21. Die Rakelarme 21 weisen jeweils einen gebogenen Abschnitt B auf. Die Rakelarme 21 der Rakeleinheit 20 sind im Wesentlichen schleifenartig ausgebildet. Die Drehrichtung D der Rakeleinheit 20 ist in dem in Fig. 2b gezeigten Ausführungsbeispiel variabel. In Bezug auf die Mittelsenkrechte M ist die Entnahmerichtung vorzugsweise bei dem in Fig. 2b gezeigten Ausführungsbeispiel in axialer Richtung, da hierbei der Filterkuchen im Filtergehäuse 9 zurückbleibt.

Die in Fig. 2c gezeigte Rakeleinheit 20 weist, von der Mittelsenkrechten M aus betrachtet, zwei Rakelarme 21 auf. Die Rakelarme 21 sind geradlinig und schlank ausgebildet. Dadurch ist eine gute Kombination von Translastions- und Rotationsbewegung bei einer Entnahme in radialer Richtung bezüglich der Filtermembran 23 gewährleistet. Die in Fig. 2c gezeigte Rakeleinheit 20 kann in beide Drehrichtungen D betrieben werden. Eine Entnahme der Rakeleinheit 20 kann sowohl in axialer Richtung bezogen auf die Mittelsenkrechte M als auch in radialer Richtung bezogen auf die Mittelsenkrechte M erfolgen.

Bei einer Entnahme der Rakeleinheit 20 ist wichtig, dass mindestens ein hinterschnittfreier Abschnitt 31a, 31b vorgesehen ist. Vorzugsweise ist ein hinterschnittfreier Abschnitt 31a im Bereich des Rakelarms 21 und dem mindestens einem Wandelement 11 vorgesehen. Vorzugsweise ist ein weiterer hinterschnittfreier Abschnitt 31b im Bereich des Rakelarms 21 und dem Begrenzungselement 17 vorgesehen. Es versteht sich von selbst, dass diebeiden hinterschnittfreien Abschnitte 31a, 31b variabel sind, das bedeutet, dass sich die diebeiden hinterschnittfreien Abschnitte 31a, 31b verschieben, wenn sich die Rakeleinheit 20 bewegt.

Der hinterschnittfreie Abschnitt 31a ist derart ausgestaltet, dass zwischen dem der Rakeleinheit 20 bzw. dem mindestens einen Rakelarm 21 und dem mindestens einen Wandelements 11 kein freier Raum vorhanden ist, in dem sich Schmutzpartikel sammeln können, die bei einer Entnahme der Rakeleinheit 20 aus dem Filtergehäuse 9 von der Filtermembran 23 abgestreift werden. Mit anderen Worten, der mindestens eine Rakelarm 21 liegt im Wesentlichen derart an dem Filtergehäuse 9 an, dass sich die Rakeleinheit 20 relativ zu dem Filtergehäuse 9 bewegen kann oder umgekehrt.

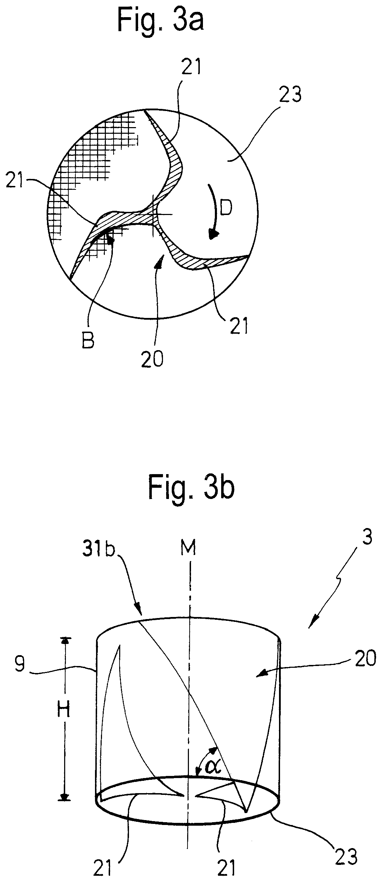

In den Fig. 3a und 3b ist jeweils eine Draufsicht eines Ausschnitts einer Filtereinheit 3 mit einem Ausführungsbeispiel einer asymmetrisch ausgebildeten Rakeleinheit 20 gezeigt.

In Fig. 3a ist eine Rakeleinheit 20 mit drei Rakelarmen 21 gezeigt. Die bevorzugte Drehrichtung D in dem gezeigten Ausführungsbeispiel ist im Uhrzeigersinn. Die Rakelarme 21 weisen eine derartige Krümmung oder gebogene Abschnitte B auf, dass bei einer Drehrichtung D im Uhrzeigersinn, die Schmutzpartikel radial nach außen, von der Mittelsenkrechten M weg, transportiert werden. Die Schmutzpartikel können gegebenenfalls auf der Filtermembran 23 in einem nicht abgerakelnden Bereich gesammelt werden (hier nicht dargestellt). Das ist dann der Fall, wenn die Filtermembran 23 nicht kreisförmig sondern beispielsweise quadratisch ausgebildet wäre und die Rakeleinheit 20 eine kreisförmige Fläche der Filtermembran 23 abrakelt.

Würde die Rakeleinheit 20 in Fig. 3a eine Drehrichtung D gegen den Uhrzeigersinn aufweisen, würden die Schmutzpartikel in Richtung der Mittelsenkrechten M gerakelt werden.

In Fig. 3b ist eine Rakeleinheit 20 mit drei gebogenen Rakelarmen 21 dargestellt. Die Rakelarme 21 sind in diesem Ausführungsbeispiel in einem Winkel α, der sich zwischen der Filtermembran 23 und dem Rakelarm 21 aufspannt, mit α<90 Grad ausgebildet. Die Rakelarme 21 liegen in Bezug auf die Filtermembran 23 derart auf der Filtermembran 23 auf, dass die Rakelarme 21 schräg zu der Filtermembran 23 angeordnet sind. Die Rakeleinheit 20 erstreckt sich über eine gesamte Höhe H der Filtereinheit 3. Die Höhe H kann sich beispielsweise von der Filtermembran 23 bis hin zu dem Begrenzungselement 17 erstrecken. Wie oben bereits erwähnt, ist zwischen der Filtermembran 23 und dem Begrenzungselement 17 das mindestens eine Wandelement 11 angeordnet, so dass sich die Höhe H im Wesentlichen über das mindestens eine Wandelement 11 erstreckt, dass zwischen der Filtermembran 23 und dem Begrenzungselement 17 ausgebildet ist.

Wichtig für alle Ausführungsformen der Rakeleinheit 20 ist, dass sich die Rakelarme 21 vorzugsweise über die gesamte Höhe H der Filtereinheit 3 erstrecken, so dass sich keine Schmutzpartikel, wie beispielsweise Haare, über die Rakelarme 21 der Rakeleinheit 20 legen können und somit einen Reinigungsprozess erschweren bzw. verlängern. Das bedeutet, dass ein hinterschnittfreier Abschnitt 31b vorgesehen ist, so dass zwischen der Rakeleinheit 21 und dem Begrenzungselement 17 kein freier Raum vorhanden ist, in dem sich Schmutzpartikel sammeln können, die bei einer Entnahme der Rakeleinheit 20 aus dem Filtergehäuse 9 von der Filtermembran 23 abgestreift werden. Die Rakeleinheit 20 und das Filtergehäuse 9 bilden im Wesentlichen zwei hinterschnittfreie Abschnitte 31a und 31b aus.

Weiterhin ist wichtig, dass sich die Rakeleinheit 20 im Bereich des Begrenzungselement 17 über die gesamte Fläche des Begrenzungselements 17 erstreckt, so dass sich im Bereich des Begrenzungselement 17 keine Schmutzpartikel, insbesondere in Form von Haaren, über die Rakeleinheit 20 legen können.

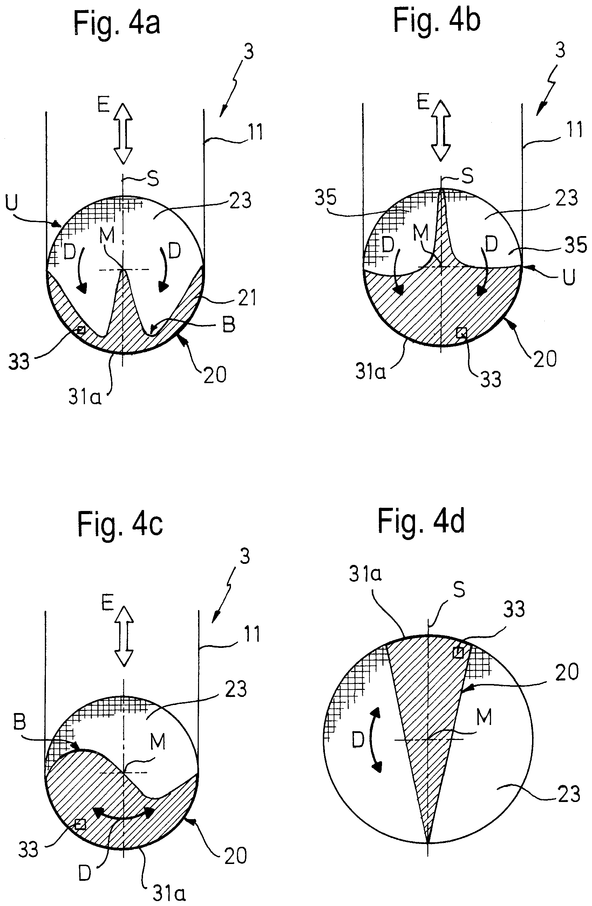

In den Fig. 4a bis 4d ist jeweils eine Draufsicht eines Ausschnitts einer Filtereinheit 3 mit einem Ausführungsbeispiel einer radial entnehmbaren Rakeleinheit 20 gezeigt. Jede dargestellte Ausführungsform hat ihre eigenen Vorteile.

In Fig. 4a ist eine Rakeleinheit 20 gezeigt, die eine symmetrische Form in Bezug auf die Mittelsenkrechte M aufweist. Weiterhin weist die Rakeleinheit 20 mindestens einen gebogenen Abschnitt B auf. Die Rakeleinheit 20 weist Rakelarme 21 auf, wobei sich die Rakeleinheit 20 im Wesentlichen über einen halben Umfang U der abzurakelnden Fläche der Filtermembran 23, die hier als Kreisfläche dargestellt ist, erstreckt. In Richtung des mindestens einen Wandelements 11 weist die Rakeleinheit 20 bzw. weisen die Rakelarme 21 einen hinterschnittfreien Abschnitt 31a auf, damit sich, wie oben bereits erwähnt ist, keine Schmutzpartikel zwischen der Rakeleinheit 20 und dem Wandelement 11 sammeln können, die bei einer Entnahme der Rakeleinheit 20 aus dem Filtergehäuse 9 von der Filtermembran 23 abgestreift werden. Die Drehrichtung D der Rakeleinheit 20 ist bei der Ausführungsform in Fig. 4a beliebig wählbar, wobei die Schmutzpartikel im Wesentlichen von außen nach innen bzw. von dem mindestens einen Wandelement 11 zur Mittelsenkrechten M hin gerakelt bzw. transportiert werden. Einfach gesagt, bedeutet das, dass die Schmutzpartikel im Wesentlichen im Bereich der Mittelsenkrechten M gesammelt werden.

Die Rakeleinheit 20 in Fig. 4a ist bezüglich der Mittelsenkrechten M sowohl in axialer Richtung als auch in radialer Richtung entnehmbar. Bei einer Entnahme der Rakeleinheit 20 in axialer Richtung, ist lediglich das der Filtermembran 23 gegenüberliegend angeordnete Wandelement 11 und/oder Begrenzungselement 17 zu entfernen, um die Entnahmeöffnung 29 freizugeben. Anschließend ist die Rakeleinheit 20 aus dem Filtergehäuse 9 entnehmbar. Es kann aber auch eine Klappe ausgebildet sein, die die Entnahmeöffnung 29 verschließt vorgesehen sein (nicht dargestellt).

Bei der Entnahme in radialer Richtung, ist wichtig, dass die Rakeleinheit 20 zunächst derart positioniert wird, dass der hinterschnittfreie Abschnitt 31a der Rakeleinheit 20 im Bereich der Entnahmeöffnung 29 positioniert ist. Vorzugsweise ist die Entnahmeöffnung 29 an den hinterschnittfreien Abschnitt 31a derart angepasst, dass bei einer Entnahme in radialer Richtung keine Schmutzpartikel von der Filtermembran 23 mit aus dem Filtergehäuse 9 abgestreift werden.

Zum Positionieren der Rakeleinheit 20 mit dem hinterschnittfreien Abschnitt 31a an der Entnahmeöffnung 29 sind Positionierelemente 33 vorgesehen. Die Positionierelemente 33 können mechanisch und/oder elektronisch ausgebildet sein. Beispielsweise kann das Positionieren über Sensoren und/oder Elektromagnete, aber auch mittels Führstifte oder durch manuelle Positionierungselemente erfolgen.

Der doppelseitige Pfeil E zeigt die Entnahmerichtung in radialer Richtung an. Damit wird dargestellt, dass eine Relativbewegung von Filtermembran 23 zu der Rakeleinheit 20 erfolgt. Entweder kann die Rakeleinheit 20 in radialer Richtung in der der hinterschnittfreie Abschnitt 31a angeordnet ist oder die Filtermembran 23 in radialer Richtung, die von der Rakeleinheit 20 weg zeigt, entnommen werden. Durch diese Ausführungsform wird gewährleistet, dass die Schmutzpartikel im Wesentlichen auf der Filtermembran verbleiben.

Sollte bewusst ein Abstreifen der Filtermembran 23 erfolgen, muss die Rakeleinheit 20 in entgegengesetzter Richtung radial entnommen werden, so dass der hinterschnittfreie Abschnitt 31a die Filtermembran 23 bei einer Entnahme der Rakeleinheit 20 oder der Filtermembran 23 als letztes verlässt. Für den Fall, dass die Filtermembran 23 bewegt wird, ist wiederum der hinterschnittfreie Abschnitt 31a, der Teil, der die Filtermembran 23 als letztes verlässt. Für die beiden letzten Fälle, bei denen ein Abstreifen der Filtermembran 23 erfolgt, ist ein Aufnahmebehälter (nicht dargestellt) vorgesehen, der die abgestreiften Schmutzpartikel sammelt bzw. aufnimmt, so dass die Schmutzpartikel nicht in dem wasserführenden Haushaltsgerät 1 verteilt werden.

In Fig. 4b ist eine Rakeleinheit 20 dargestellt, die wie die in Fig. 4a gezeigte Rakeleinheit 20 einen hinterschnittfreien Abschnitt 31a aufweist, der sich im Wesentlichen über den halben Umfang U der abzurakelnden Fläche der Filtermembran 23 erstreckt. Im Vergleich zu der in Fig. 4a gezeigten Rakeleinheit 20, nimmt die in Fig. 4b gezeigte Rakeleinheit 20 einen Großteil der Filtermembran 23 ein. Die Filtermembran 23 ist durch die Rakeleinheit 20 in Fig. 4b in zwei Filterbereiche 35 aufgeteilt. Die Drehrichtung D der Rakeleinheit 20 in Fig. 4b ist variabel, wobei die Schmutzpartikel von innen nach außen bzw. von der Mittelsenkrechten M zum mindestens einen Wandelement 11 gerakelt bzw. transportiert werden. Weiterhin ist die Rakeleinheit 20 in Fig. 4b im Wesentlichen symmetrisch zu der Symmetrieachse S ausgebildet und weist zumindest ein Positionierelement 33 auf.

Die Rakeleinheit 20 in Fig. 4c ist asymmetrisch in Bezug auf die Mittelsenkrechte M ausgebildet. Weiterhin weist die Rakeleinheit 20 mindestens einen gebogenen Abschnitt B auf. Die Drehrichtung D ist bei diesem Ausführungsbeispiel variabel, wobei die Drehrichtung D im Uhrzeigersinn bevorzugt werden sollte, um ein Abrakeln der Filtermembran 23 von innen nach außen bzw. von der Mittelsenkrechten M zum mindestens einen Wandelement 11 zu gewährleisten. Ist aber gewünscht, dass die Schmutzpartikel von der Rakeleinheit 20 gesammelt werden, ist die Drehrichtung D gegen den Uhrzeigersinn zu wählen. Beide Möglichkeiten haben ihre Vorteile. Die Rakeleinheit 20 weist in Fig. 4c einen hinterschnittfreien Abschnitt 31a auf, der sich im Wesentlichen über den halben Umfang U der abzurakelnden Fläche der Filtermembran 23 erstreckt. Über mindestens ein Positionierelement 33 ist die Rakeleinheit 20 in Fig. 4c positionierbar, so dass die Rakeleinheit 20 bei einer Entnahme an der Entnahmeöffnung 29 entnehmbar ist, ohne Schmutzpartikel mit aus dem Filtergehäuse 9 mitzunehmen.

In Fig. 4d ist die Rakeleinheit 20 kuchenstückartig ausgebildet. Weiterhin ist die Rakeleinheit 20 symmetrisch ausgebildet und die Drehrichtung D ist variabel. Die Rakeleinheit 20 ist derart ausgebildet, dass der Teil, der dem hinterschnittfreien Abschnitt 31a gegenüberliegend ausgebildet ist, im Wesentlichen hinterschnittfrei an dem mindestens einem Wandelement 11 anliegt. Die Rakeleinheit 20 ist somit im Wesentlichen hinterschnittfrei ausgebildet, damit sich in dem Bereich in dem die Rakeleinheit 20 an dem mindestens einen Wandelement 11 anliegt, bzw. das mindestens eine Wandelement 11 berührt, keine Schmutzpartikel um die Rakeleinheit 20 wickeln können. Aufgrund der kuchenstückartig ausgestalteten Rakeleinheit 20 in Fig. 4d, ist ein Abrakeln der Filtermembran 23 von innen nach außen bzw. von der Mittelsenkrechten M zum mindestens einen Wandelement 11 vorgesehen.

Mindestens ein Positionierelement 33 ist vorgesehen, um die Rakeleinheit 20 an der Entnahmeöffnung 29 derart zu positionieren, so dass eine gewünschte Entnahme in radialer Richtung, sei es von der Filtermembran 23 oder der Rakeleinheit 20, möglich ist. Wenn die Rakeleinheit 20 dem Filtergehäuse 9 in radialer Richtung entnommen wird, entspricht die Entnahmeöffnung 29 vorzugsweise dem hinterschnittfreien Abschnitt 31a. Ist gewünscht, dass die Filtermembran 23 entnehmbar ist, dann ist die die Entnahmeöffnung 29 vorzugsweise an die Filtermembran 23 angepasst.

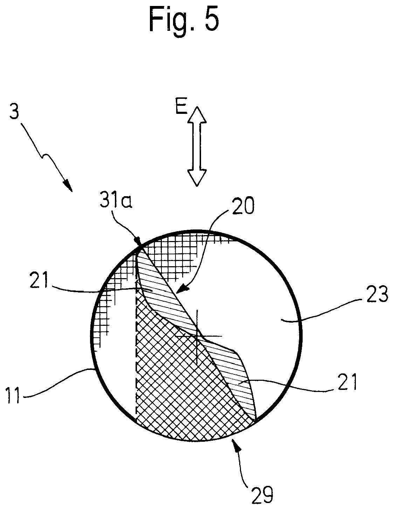

In Fig. 5 ist eine beispielhafte Darstellung einer Filtereinheit 3 bei radialer Entnahme der Filtermembran 23 oder der Rakeleinheit 20 gezeigt, wenn eine vorzugsweise axial entnehmbar ausgebildete Rakeleinheit 20 vorliegt. Das heißt, die Rakeleinheit 20 sollte bei der Ausgestaltung in Fig. 5, Rakeleinheit 20 weist Propellerform auf, in axialer Richtung entnommen werden. Im Ausführungsbeispiel in Fig. 5 wird aber beispielhaft eine Entnahme der Rakeleinheit 20 in radialer Richtung beschrieben.

Im vorliegenden Beispiel, wird die Rakeleinheit 20 in Fig. 5 von der Filtermembran 23 und/oder in umgekehrter Weise, in radialer Richtung abgestreift. Die Rakeleinheit 20 wird beispielsweise in Richtung der Schmutzpartikel entnommen. Im Ausführungsbeispiel in Fig.5 ist zur besseren Veranschaulichung eine größere Entnahmeöffnung 29 dargestellt, als für eine Entnahme der Rakeleinheit 20 in radialer Richtung nötig wäre. Aufgrund der Geometrie der Rakeleinheit 20 in Fig. 5, wird eine breite Fläche der Filtermembran 23 beim Entnehmen der Rakeleinheit 20 aus dem Filtergehäuse 9 mit abgestreift. Somit wird auch eine erhebliche Menge an Schmutzpartikeln mit der Rakeleinheit 20 von der Filtermembran 23 abgestreift.

Damit die Schmutzpartikel nicht überall verteilt werden, bietet sich in diesem Fall der bereits oben erwähnte Aufnahmebehälter, der benachbart zu der Filtermembran 23 angeordnet sein kann, an (nicht dargestellt). In dem Aufnahmebehälter werden die Schmutzpartikel gesammelt. Je nach Anforderungen an die Filtereinheit 3, kann ein jeweiliges Konzept für die Entnahme gewählt bzw. angepasst werden. Bei der in Fig. 5 gezeigten Rakeleinheit 20, würde sich eine Entnahme der Rakeleinheit 20 in axialer Richtung besser eignen bzw. anbieten, um möglichst wenig Schmutzpartikel bei der Entnahme von der Filtermembran 23 abzustreifen. Der Filterkuchen mit Schmutzpartikeln würde im Wesentlichen im Filtergehäuse 9 zurückbleiben.

Mit dem Ausführungsbeispiel in Fig. 5 soll lediglich gezeigt werden, dass die Geometrie der Rakeleinheit 20 eine entscheidende Rolle dabei spielt, ob die Entnahme in radialer Richtung und/oder in axialer Richtung erfolgen sollte. Durch die Geometrie und die Entnahmerichtung der Rakeleinheit 20 kann bei einem Reinigungsvorgang der Filtereinheit 3 beeinflusst werden, dass möglichst wenig Schmutzpartikel in und um das wasserführende Haushaltsgerät 1 verteilt werden.

### BEZUGSZEICHENLISTE

- 1.: Wasserführendes Haushaltsgerät
- 3.: Filtereinheit
- 5.: Zulaufleitung
- 6.: Fluid
- 7.: Ablaufleitung
- 9.: Filtergehäuse
- 11.: Wandelement
- 13.: Einlassöffnung
- 15.: Auslassöffnung
- 17.: Begrenzungselement
- 18.: Filterbaugruppe
- 19a.: Erste Komponente
- 19b.: Zweite Komponente
- 20.: Rakeleinheit
- 21.: Rakelarm
- 23.: mindestens eine Filtermembran
- 25.: weitere Filtermembran
- 27.: Antriebseinheit
- 29.: Entnahmeöffnung
- 31a.: hinterschnittfreier Abschnitt Wandelement
- 31b.: hinterschnittfreier Abschnitt Begrenzungselement
- 33.: Positionierelement

- B.: Gebogener Abschnitt
- D.: Drehrichtung (Pfeil)
- E.: Entnahmerichtung
- M.: Mittel senkrecht
- S.: Symmetrieachse
- U.: Umfang Filtermembran

## Patentansprüche

1. Wasserführendes Haushaltsgerät (1) mit einer Filtereinheit (3) zum Filtern von Fluiden (6) mit
einem Filtergehäuse (9) mit mindestens einem Wandelement (11),
einer Filterbaugruppe (18), wobei die Filterbaugruppe (18) mindestens eine erste Komponente (19a) und mindestens eine zweite Komponente (19b) umfasst, wobei die mindestens eine erste Komponente (19a) mindestens eine Filtermembran (23) zum Filtern des Fluids (6) aufweist und die mindestens eine zweite Komponente (19b) eine Rakeleinheit (20) umfasst, die die mindestens eine Filtermembran (23) reinigt, wobei die Rakeleinheit (20) mindestens einen Rakelarm (21) aufweist und der mindestens eine Rakelarm (21) an der mindestens einen Filtermembran (23) im Wesentlichen anliegt,
mindestens einer Filtereinlassöffnung (13), durch die Fluid (6) in die Filtereinheit (3) strömt,
mindestens einer Filterauslassöffnung (15), die im Bereich der Filtermembran (23) ausgebildet ist und durch die das Fluid (6) aus dem Filtergehäuse (9) strömt,
**dadurch gekennzeichnet, dass**
eine Entnahmeöffnung (29) an dem Filtergehäuse (9) ausgebildet ist, über die mindestens eine der Komponenten (19a, 19b) der Filterbaugruppe (18) in einer Entnahmerichtung (E) derart aus dem Filtergehäuse (9) entnehmbar ist, so dass abgelagerte Schmutzpartikel in dem Filtergehäuse (9) zurückbleiben,
wobei sich die Rakeleinheit (20) von der Filtermembran (23) zur Entnahmeöffnung (29) hin erstreckt und wobei die Rakeleinheit (20) bezüglich der Entnahmerichtung (E) hinterschnittfrei ausgebildet ist, wobei hinterschnittfrei hier bedeutet, dass kein Spalt oder Freiraum zwischen der Rakeleinheit (20) und dem mindestens einen Wandelement (11) ausgebildet ist, in dem sich Schmutzpartikel sammeln bzw. ablagern können, wobei die Rakeleinheit (20) somit im Wesentlichen an dem mindestens einen Wandelement (11) derart anliegend ausgebildet ist, dass sich keine Ablagerungen von Schmutzpartikeln zwischen dem mindestens einen Wandelement (11) und der Rakeleinheit (20) bilden,
wobei ein Begrenzungselement (17) zum Begrenzen der Filtereinheit (3) ausgebildet ist, und wobei das mindestens eine Wandelement (11) eine Höhe H aufweist, die sich von der Filtermembran (23) bis zu dem mindestens einen Begrenzungselement (17) erstreckt, und die Rakeleinheit (20) sich im Wesentlichen über die Höhe H erstreckt.

2. Wasserführendes Haushaltsgerät (1) nach Anspruch 1, **dadurch gekennzeichnet, dass** das Filtergehäuse (9) eine Mittelsenkrechte M aufweist, die im Wesentlichen senkrecht zu der mindestens einen Filtermembran (23) ist, wobei die Rakeleinheit (20) von der Filtermembran (23) in radialer Richtung und/oder in axialer Richtung bezüglich der Mittelsenkrechten M entnehmbar ist.

3. Wasserführendes Haushaltsgerät (1) nach einem der vorangehenden Ansprüche, **dadurch gekennzeichnet, dass** eine Antriebseinheit (27) in dem mindestens einem Rakelarm (21) ausgebildet ist, wobei die Antriebseinheit (27) eine Relativbewegung von Filtermembran (23) und Rakeleinheit (20) zueinander erzeugt.

4. Wasserführendes Haushaltsgerät (1) nach einem der vorangehenden Ansprüche, **dadurch gekennzeichnet, dass** bei einer Entnahme der Rakeleinheit (20) in radialer Richtung, Positionierelemente (33) ausgebildet sind, die die Rakeleinheit (20) derart positionieren, dass die Rakeleinheit (20) derart aus dem Filtergehäuse (9) entnehmbar ist, dass abgelagerte Schmutzpartikel im Filtergehäuse (9) zurückbleiben.

5. Wasserführendes Haushaltsgerät (1) nach einem der vorangehenden Ansprüche, **dadurch gekennzeichnet, dass** der mindestens eine Rakelarm (21) mindestens einen gebogenen Abschnitt B aufweist.

6. Wasserführendes Haushaltsgerät (1) nach einem der vorangehenden Ansprüche, **dadurch gekennzeichnet, dass** sich der mindestens eine Rakelarm (21) im Wesentlichen senkrecht von der mindestens einen Filtermembran (23) erstreckt.

7. Wasserführendes Haushaltsgerät (1) nach einem der Ansprüche 1 bis 5, **dadurch gekennzeichnet, dass** der mindestens eine Rakelarm (21) und die Filtermembran (23) einen Winkel α<90 Grad aufspannen, so dass der mindestens eine Rakelarm (21) schräg in Bezug auf die Filtermembran (23) ausgebildet ist.

8. Wasserführendes Haushaltsgerät (1) nach einem der vorangehenden Ansprüche soweit rückbezogen auf Anspruch 2, **dadurch gekennzeichnet, dass** die Filtermembran (23) in radialer Richtung bezüglich der Mittelsenkrechten M entnehmbar ist.

9. Wasserführendes Haushaltsgerät (1) nach einem der vorangehenden Ansprüche soweit rückbezogen auf Anspruch 2, **dadurch gekennzeichnet, dass** die Rakeleinheit (20) symmetrisch in Bezug auf die Mittelsenkrechte M ausgebildet ist.

10. Wasserführendes Haushaltsgerät (1) nach einem der Ansprüche 1 bis 8 soweit rückbezogen auf Anspruch 2, **dadurch gekennzeichnet, dass** der mindestens eine Rakeleinheit (20) asymmetrisch in Bezug auf die Mittelsenkrechte M ausgebildet ist.

11. Wasserführendes Haushaltsgerät (1) nach einem der vorangehenden Ansprüche, **dadurch gekennzeichnet, dass** das mindestens eine Wandelemente (11) zumindest teilweise eine weitere Filtermembran (25) aufweist.

12. Wasserführendes Haushaltsgerät (1) nach Anspruch 11, **dadurch gekennzeichnet, dass** die weitere Filtermembran (25) im Bereich der Filtermembran (23) ausgebildet ist, wobei die Rakeleinheit (20) die weitere Filtermembran (25) zumindest teilweise bedeckt.

## Claims

1. Water-transporting household appliance (1) with a filter unit (3) for filtering fluids (6) with
a filter housing (9) with at least one wall element (11),
a filter assembly (18), wherein the filter assembly (18) comprises at least one first component (19a) and at least one second component (19b), wherein the at least one first component (19a) has at least one filter membrane (23) for filtering the fluid (6) and the at least one second component (19b) comprises a squeegee unit (20), which cleans the at least one filter membrane (23), wherein the squeegee unit (20) has at least one squeegee arm (21) and the at least one squeegee arm (21) is essentially in contact with the at least one filter membrane (23),
at least one fluid inlet opening (13), through which fluid (6) flows into the filter unit (3),
at least one filter inlet opening (15), which is embodied in the region of the filter membrane (23) and through which the fluid (6) flows out from the filter housing (9),
**characterised in that**
a removal opening (29) is embodied on the filter housing (9), via which at least one of the components (19a, 19b) of the filter assembly (18) can be removed from the filter housing (9) in a removal direction (E) such that dirt particles accumulated in the filter housing (9) remain,
wherein the squeegee unit (20) extends from the filter membrane (23) to the removal opening (29) and wherein the squeegee unit (20) is embodied without undercuts relative to the removal direction (E), wherein, "without undercuts" here means that there is no gap or free space embodied between the squeegee unit (20) and the at least one wall element (11), in which dirt particles can build up or accumulate, wherein the squeegee unit (20) is thus essentially embodied to be in contact with the at least one wall element (11) such that no accumulation of dirt particles can form between the at least one wall element (11) and the squeegee unit (20),
wherein a limiting element (17) is embodied for delimiting the filter unit (3), and wherein the at least one wall element (11) has a height H, which extends from the filter membrane (23) to the at least one limiting element (17), and the squeegee unit (20) extends essentially over the height H.

2. Water-transporting household appliance (1) according to claim 1, **characterised in that** the filter housing (9) has a perpendicular bisector M, which is essentially perpendicular to the at least one filter membrane (23), wherein the squeegee unit (20) can be removed from the filter membrane (23) in the radial direction and/or in the axial direction relative to the perpendicular bisector M.

3. Water-transporting household appliance (1) according to one of the preceding claims, **characterised in that** a drive unit (27) is embodied in the at least one squeegee arm (21), wherein the drive unit (27) generates a relative movement of the filter membrane (23) and the squeegee unit (20) in relation to one another.

4. Water-transporting household appliance (1) according to one of the preceding claims, **characterised in that** when the squeegee unit (20) is removed in the radial direction, positioning elements (33) are embodied which position the squeegee unit (20) such that the squeegee unit (20) can be removed from the filter housing (9) in such a manner that the accumulated dirt particles remain in the filter housing (9).

5. Water-transporting household appliance (1) according to one of the preceding claims, **characterised in that** the at least one squeegee arm (21) has at least one curved section B.

6. Water-transporting household appliance (1) according to one of the preceding claims, **characterised in that** the at least one squeegee arm (21) extends essentially perpendicularly from the at least one filter membrane (23).

7. Water-transporting household appliance (1) according to one of claims 1 to 5, **characterised in that** the at least one squeegee arm (21) and the filter membrane (23) span an angle α<90 degrees, so that the at least one squeegee arm (21) is embodied obliquely in relation to the filter membrane (23).

8. Water-transporting household appliance (1) according to one of the preceding claims if reference is made to claim 2, **characterised in that** the filter membrane (23) can be removed in the radial direction relative to the perpendicular bisector M.

9. Water-transporting household appliance (1) according to one of the preceding claims if reference is made to claim 2, **characterised in that** the squeegee unit (20) is embodied symmetrically in relation to the perpendicular bisector M.

10. Water-transporting household appliance (1) according to one of claims 1 to 8 if reference is made to claim 2, **characterised in that** the at least one squeegee unit (20) is embodied asymmetrically in relation to the perpendicular bisector M.

11. Water-transporting household appliance (1) according to one of the preceding claims, **characterised in that** the at least one wall element (11) has at least in part a further filter membrane (25).

12. Water-transporting household appliance (1) according to claim 11, **characterised in that** the further filter membrane (25) is embodied in the region of the filter membrane (23), wherein the squeegee unit (20) covers the further filter membrane (25) at least in part.

## Revendications

1. Appareil ménager à circulation d'eau (1) avec une unité filtrante (3) pour filtrer des fluides (6) avec
un carter de filtre (9) avec au moins un élément de paroi (11),
un module de filtration (18), dans lequel le module de filtration (18) comprend au moins un premier composant (19a) et au moins un deuxième composant (19b), dans lequel l'au moins un premier composant (19a) présente au moins une membrane filtrante (23) pour filtrer le fluide (6) et l'au moins un deuxième composant (19b) présente une unité de raclage (20) qui nettoie l'au moins une membrane filtrante (23), dans lequel l'unité de raclage (20) présente au moins un bras de raclage (21) et l'au moins un bras de raclage (21) est contigu à l'au moins une membrane filtrante (23), au moins un orifice d'entrée de filtre (13) à travers lequel le fluide (6) s'écoule dans l'unité filtrante (3),
au moins un orifice de sortie de filtre (15) formé dans la zone de la membrane filtrante (23) et à travers lequel le fluide (6) s'écoule au départ du carter de filtre (9),
**caractérisé en ce que**
un orifice de prélèvement (29) formé sur le carter de filtre (9), qui permet de prélever au moins un des composants (19a, 19b) du module de filtration (18) dans un sens de prélèvement (E) de telle sorte du carter de filtre (9) que les particules de saleté déposées demeurent dans le carter de filtre (9),
dans lequel l'unité de raclage (20) s'étend de la membrane filtrante (23) en direction de l'orifice de prélèvement (29) et dans lequel l'unité de raclage (20) est formée sans contre-dépouille par rapport au sens de prélèvement (E), sans contre-dépouille signifiant ici qu'aucune fente ou espace libre dans laquelle/lequel des particules de saleté peuvent s'accumuler et/ou se déposer n'est formé(e) entre l'unité de raclage (20) et l'au moins un élément de paroi (11), dans lequel l'unité de raclage (20) est dès lors formée essentiellement de telle façon contiguë à l'au moins un élément de paroi (11) qu'aucun dépôt de particules de saleté ne se forme entre l'au moins un élément de paroi (11) et l'unité de raclage (20), dans lequel un élément de limitation (17) est formé pour la limitation de l'unité filtrante (3), et dans lequel l'au moins un élément de paroi (11) présente une hauteur H, qui s'étend de la membrane filtrante (23) jusqu'à l'au moins un élément de limitation (17), et l'unité de raclage (20) s'étend essentiellement sur la hauteur H.

2. Appareil ménager à circulation d'eau (1) selon la revendication 1, **caractérisé en ce que** le carter de filtre (9) présente une médiatrice M essentiellement perpendiculaire à l'au moins une membrane filtrante (23), dans lequel l'unité de raclage (20) peut être prélevée de la membrane filtrante (23) en direction radiale et/ou axiale par rapport à la médiatrice M.

3. Appareil ménager à circulation d'eau (1) selon l'une des revendications précédentes, **caractérisé en ce qu'**une unité d'entraînement (27) est formée dans l'au moins un bras de raclage (21), dans lequel l'unité d'entraînement (27) génère un mouvement relatif de la membrane filtrante (23) et de l'unité de raclage (20) l'un par rapport à l'autre.

4. Appareil ménager à circulation d'eau (1) selon l'une des revendications précédentes, **caractérisé en ce que** lors d'un prélèvement de l'unité de raclage (20) en sens radial, des éléments de positionnement (33) sont formés, lesquels positionnent l'unité de raclage (20) de telle sorte que l'unité de raclage (20) peut être prélevée de telle façon du carter de filtre (9) que les particules de saleté déposées demeurent dans le carter de filtre (9).

5. Appareil ménager à circulation d'eau (1) selon l'une des revendications précédentes, **caractérisé en ce que** l'au moins un bras de raclage (21) présente au moins une section courbée B.

6. Appareil ménager à circulation d'eau (1) selon l'une des revendications précédentes, **caractérisé en ce que** l'au moins un bras de raclage (21) s'étend essentiellement à la verticale de l'au moins une membrane filtrante (23).

7. Appareil ménager à circulation d'eau (1) selon l'une des revendications 1 à 5, **caractérisé en ce que** l'au moins un bras de raclage (21) et la membrane filtrante (23) décrivent un angle α<90 degrés, de sorte que l'au moins un bras de raclage (21) est formé en biais par rapport à la membrane filtrante (23).

8. Appareil ménager à circulation d'eau (1) selon l'une des revendications précédentes en lien avec la revendication 2, **caractérisé en ce que** la membrane filtrante (23) peut être prélevée dans le sens radial par rapport à la médiatrice M.

9. Appareil ménager à circulation d'eau (1) selon l'une des revendications précédentes en lien avec la revendication 2, **caractérisé en ce que** l'unité de raclage (20) est formée de façon symétrique par rapport à la médiatrice M.

10. Appareil ménager à circulation d'eau (1) selon l'une des revendications 1 à 8 en lien avec la revendication 2, **caractérisé en ce que** l'au moins une unité de raclage (20) est formée de façon asymétrique par rapport à la médiatrice M.

11. Appareil ménager à circulation d'eau (1) selon l'une des revendications précédentes, **caractérisé en ce que** l'au moins un élément de paroi (11) présente au moins partiellement une membrane filtrante supplémentaire (25).

12. Appareil ménager à circulation d'eau (1) selon la revendication 11, **caractérisé en ce que** la membrane filtrante supplémentaire (25) est formée dans la zone de la membrane filtrante (23), dans lequel l'unité de raclage (20) couvre au moins partiellement la membrane filtrante supplémentaire (25).
